## Europäisches Patentamt

## European Patent Office

## Office européen des brevets

(11) Veröffentlichungsnummer: **0 228 068**
**B1**

(12) **EUROPÄISCHE PATENTSCHRIFT**

(45) Veröffentlichungstag der Patentschrift:
02.08.89

(51) Int. Cl.⁴: **G 01 L 17/00,** B 60 C 23/04

(21) Anmeldenummer: **86117923.2**

(22) Anmeldetag: **23.12.86**

(54) **Eine Druckminderungsanzeige liefernde Ventilkappe für Luftreifen.**

(30) Priorität: **30.12.85 DE 3546338**

(43) Veröffentlichungstag der Anmeldung:
**06.07.87 Patentblatt 87/28**

(45) Bekanntmachung des Hinweises auf die Patenterteilung:
**02.08.89 Patentblatt 89/31**

(84) Benannte Vertragsstaaten:
**AT BE CH DE ES FR GB GR IT LI LU NL SE**

(56) Entgegenhaltungen:
**DE-A-2 422 725**
**DE-A-2 951 036**
**GB-A-2 016 697**

(73) Patentinhaber: **Achterholt, Rainer, Paul- Zoll-Strasse 3, D-8963 Waltenhofen 1 (DE)**

(72) Erfinder: **Achterholt, Rainer, Paul- Zoll- Strasse 3, D-8963 Waltenhofen 1 (DE)**

(74) Vertreter: **Brehm, Hans- Peter, Dr. Dipl.- Chem., Patentanwälte Kern, Brehm & Partner Albert-Rosshaupter- Strasse 73, D-8000 München 70 (DE)**

## Beschreibung

Die Erfindung betrifft eine Ventilkappe für Luftreifen, die auf rein mechanischem Wege eine Abnahme des Reifendrucks anzuzeigen vermag. Die Ventilkappe ist vorzugsweise für die Anwendung bei Pkw-Reifen bestimmt, die bei einem Reifen-Solldruck von etwa 1,4 bar bis 3,0 bar betrieben werden. Abgewandelte Ausführungsformen sind für Fahrradreifen, Motorradreifen und Lkw-Reifen möglich.

Insbesondere betrifft die Erfindung eine, eine Druckminderungsanzeige liefernde Ventilkappe für einen, mit einem Ventil ausgerüsteten Luftreifen. Zu den wesentlichen Bestandteilen dieser Ventilkappe gehören ein einseitig geschlossenes, auf ein Ventilrohr des Reifenventils aufschraubbares Gehäuse, ferner ein das Ventilrohr gegenüber dem offenen Gehäuseende der aufgeschraubten Ventilkappe abdichtendes Dichtungselement, weiterhin ein das Reifenventil öffnendes Betätigungsglied, und schließlich eine als Anzeige dienende auslenkbare Membran, die den Gehäuse-Innenraum in eine erste, benachbart zu einem durchsichtigen Abschnitt des geschlossenen Gehäuseendes befindliche Kammer und in eine zweite Kammer unterteilt, die über eine Bohrung in einer Gehäusewand und über das offene Reifenventil mit dem Reifeninneren kommuniziert. Eine Ventilkappe dieser Art ist aus der Deutschen offenlegungsschrift 3 104 081 bekannt. Bei der bekannten Ventilkappe bläst der Reifendruck die Membran in die geschlossene, erste Kammer hinein zu einem Ballon auf. Die Membran wird beständig im aufgeblasenen bzw. gedehnten Zustand gehalten. Zur Druckanzeige kann der durchsichtige Gehäuseabschnitt mit einer Druckskaleneinteilung versehen sein, so daß der Reifendruck aus der Lage des Scheitelpunktes der ausgelenkten Membran bezüglich der Skaleneinteilung ablesbar ist. Alternativ kann auf der Membranoberfläche ein Muster vorgesehen sein, das durch das Aufblasen der Membran so deformierbar ist, daß aus der Deformation des Musters der Reifendruck abgelesen und geprüft werden känn. In jedem Fälle führt eine Abnahme des Reifendruckes zu einer entsprechenden Kontraktion des aufgeblasenen Ballons, wobei sich der Scheitelpunkt der Membran vom durchsichtigen Gehäuseende entfernen wird.

Obwohl seit mehreren Jahren bekannt, ist diese Ventilkappe offensichtlich nicht in gewerblichem Umfang realisiert worden. Möglicherweise beruht dies darauf, daß die Genauigkeit der Anzeige einer Druckminderung sowie die Erkennbarkeit einer solchen Anzeige nicht befriedigt haben.

Eine nach dem gleichen Prinzip arbeitende Ventilkappe mit ständiger Luftdruck-Anzeige ist auch aus der DE-OS-2 518 859 bekannt. Auch hier wirkt der Reifendruck ständig auf eine(n) verstellbare(n) Membran oder Kolben ein, und diese Verstellung innerhalb einer geschlossenen Kappe aus durchsichtigem Material - gegebenenfalls gegenüber einer fest angebrachten Markierung - dient als Anzeige des aktuellen Reifendruckes.

Grundsätzlich sind Ventilkappen dieser Art kleine und leichte Vorrichtungen. Das Gewicht darf 1 oder 2 Gramm nicht übersteigen, um keine merkliche Unwicht am Reifen hervorzurufen. Nach DIN 7757 hat das Innengewinde gängiger Ventilkappen (Vg 8) einen Durchmesser von 8 mm. Daraus resultiert für die auslenkbare Membran ein Durchmesser von etwa 6 bis 9 mm. Eine solch kleine Membran ist bei der bekannten Ventilkappe ständig dem Reifendruck ausgesetzt, der bei den meisten Pkw-Reifen bei etwa 1,8 bis 2,4 bar liegt. Dieser Reifendruck soll die Membran zu einem Ballon definierter Größe aufblasen, welcher den ständigen Anderungen und Schwankungen des Druckes bei der üblichen Reifenbenutzung standhält, und der dennoch auf eine Abnahme des Reifendruckes von 0,3 bar mit einer deutlich erkennbaren Kontraktion reagiert. In der Praxis lassen sich die beständige Beaufschlagung der Membran mit einem Reifendruck im gängigen Bereich von 1,4 bis 3 bar und andererseits eine deutlich sichtbare Änderung der Ballon-Kontraktion bei einer Reifemdruckabnahme von 0,3 bar nicht befriedigend kombinieren.

Erschwerend kommt hinzu, daß beim üblichen Reifengebrauch infolge Temperaturanstiegs, etwa durch Anderungen der Umgebungstemperatur oder schnelle Fahrzeugbewegung durchaus ein Druckanstieg bis etwa 0,3 bar auftreten kann. Eine, eine Druckminderungsanzeige liefernde Ventilkappe für Luftreifen soll einerseits diese bei üblichem Gebrauch auftretenden Druckschwankungen nicht anzeigen und soll andererseits eine Abnahme des Reifendruckes von wenigstens 0,3 bar gegenüber dem Reifen-Solldruck deutlich sichtbar anzeigen. Für ein kleines, rein mechanisch arbeitendes System, das preiswert in erheblichen Stückzahlen herstellbar sein soll, sind das ganz erhebliche Anforderungen.

Die Aufgabe der vorliegenden Erfindung besteht darin, eine Ventilkappe der eingangs genannten Art bereitzustellen, die in einer einzigen Ausführungsform für jeden gängigen Reifendruck im Bereich von wenigstens 1,4 bis 3,0 bar einsetzbar ist, und die jedenfalls dann eine deutlich sichtbare und leicht ablesbare Anzeige liefert, wenn der Reifendruck um 0,3 bar oder mehr gegenüber einem Sollwert abfällt.

Nach einem weiteren Ziel der Erfindung soll die von der Ventilkappe gelieferte Anzeige einer Druckminderung von denjenigen Druckänderungen nicht beeinträchtigt werden, die bei üblicher Belastung und Benutzung eines Reifens, etwa eines Pkw-Reifens, bei schneller Autobahnfahrt auftreten.

Nach einem weiteren Ziel der Erfindung soll diese Ventilkappe einfach aufgebaut und preiswert herstellbar sein.

Ausgehend von einer Ventilkappe mit den oben genannten Bestandteilen und Merkmalen ist die erfindungsgemäße Lösung dieser Aufgabe und Ziele dadurch gekennzeichnet, daß die Bohrung in der Gehäusewand mittels eines Dichtungsstückes dicht verschließbar ist; zwischen der ersten Kammer und dem offenen Reifenventil wenigstens ein im Gehäusematerial ausgesparter, nicht verschließbarer Kanal vorhanden ist; und bei einem gegenüber dem Ausgangszustand geringeren Reifendruck die Membran sich in einer dem durchsichtigen Gehäuseabschnitt angenäherten Stellung befindet.

Nach einem wesentlichen Gesichtspunkt der Erfindung wird innerhalb der Ventilkappe ein dicht verschließbarer Raum geschaffen, in dem als Referenzdruck der Reifen-Solldruck herrscht. Auf die Membran wirkt ständig einerseits dieser Referenzdruck und andererseits der aktuelle Reifendruck ein. Weil die Differenz zwischen diesen beiden Drucken klein ist, wird eine erhebliche mechanische Belastung der Membran vermieden. Die Membran kann aus vergleichsweise leicht dehnbarem Material gefertigt werden, so daß eine vergleichsweise geringe Druckänderung von lediglich wenigen 1/10 bar bereits eine erhebliche Membranauslenkung hervorruft. Insbesondere wenn die Membran eine Signal- oder Kontrastfarbe bezüglich ihrer Umgebung aufweist, kann die Annäherung einer solchen Membran an eine Blendenöffnung innerhalb einer Sichtblende leicht erkannt werden. Bereits bei einer geringen Druckabnahme liefert diese Merkmalskombination eine deutlich sichtbare und leicht ablesbare Anzeige. Durch entsprechende Wahl von Material und Abmessungen der Membran läßt sich deren Empfindlichkeit in einem weiten Bereich einstellen. Ohne weiteres läßt sich eine deutlich erkennbare Membranauslenkung von etwa 2 bis 3 mm bei einem Abfall des Reifendrucks von lediglich 0,1 bis 0,2 bar erzielen.

Diese hohe Ansprechgenauigkeit wird durch die Druckänderungen bei üblicher Belastung und Benutzung eines Reifens nicht beeinträchtigt, weil diese Druckänderungen den Referenzdruck innerhalb des geschlossenen Raums nicht verändern. Bei Belastung und Benutzung eines Reifens treten üblicherweise Druckerhöhungen gegenüber dem Reifen-Solldruck auf; solche Druckerhöhungen bewirken eine von der Sichtblende weg gerichtete Auslenkung der Membran, die vom Benutzer nicht wahrgenommen werden kann.

Wie nachstehend noch im einzelnen dargelegt wird, besteht die erfindungsgemäße Ventilkappe aus wenigen Einzelteilen. Das Ventilkappengehäuse kann aus üblichen Kunststoffen bestehen, die eine Spritzgußformung zulassen. Alternativ kann wenigstens der auf das Reifenventil aufschraubbare Abschnitt aus Metall, etwa aus Messing oder Zamak, bestehen. Deren Zusammenbau erfordert lediglich Schraub- oder Schweißverbindungen. Dadurch ist einfacher Aufbau und preiswerte Herstellung gewährleistet. Eine automatisierte Serienfertigung mit hohen Stückzahlen ist möglich.

Vorteilhafte Ausgestaltungen und Weiterbildungen der erfindungsgemäßen Ventilkappe ergeben sich aus den Unteransprüchen.

Vorzugsweise ist das Dichtungselement beim Aufschrauben der Ventilkappe auf das Ventilrohr des Reifenventils um wenigstens 1,5 mm komprimierbar. Hierzu kann das - aus einem ausreichend elastischen Material bestehende - Dichtungselement in eine ringförmige Aussparung eingesetzt sein, deren Querschnittsabmessungen den Dichtungselement-Querschnitt übersteigen, um ausreichenden Platz für eine Verformung des Dichtungselementes zu schaffen.

Für das die Bohrung in der Gehäusewand verschließende Dichtungsstück können verschiedene Ausführungsformen vorgesehen werden. Notwendig ist, daß - nach Einstellung des Reifen-Solldruckes in der ersten und in der zweiten Kammerdieses Dichtungsstück die zweite Kammer dauerhaft verschließt, um in der zweiten Kammer einen Referenzdruck zu schaffen, welcher dem Reifen-Solldruck entspricht.

Beispielsweise kann das Dichtungsstück als Absperrkörper ausgebildet sein, der von einem Abschnitt der Reifenventilrohr-stirnfläche gegen die Bohrung in der Gehäusewand gepreßt wird und diese dauerhaft sperrt. Alternativ kann ein solcher Absperrkörper auch an einem anderen Abschnitt des Reifenventils abgestützt werden, beispielsweise auf der den Reifenventilstößel führenden Brücke. Eine besonders gute und dauerhafte Dichtigkeit wird dann erreicht, wenn die Bohrung in der Gehäusewand ein Ventilsitzprofil aufweist, und an diesem Absperrkörper ein Ventilkörperabschnitt angeformt ist, der an dieses Ventilsitzprofil angepaßt ist.

Wenn - wie vorzugsweise vorgesehen ist - das Dichtungselement beim Aufschrauben der Ventilkappe auf das Reifenventilrohr um wenigstens ca. 1,5 mm komprimierbar ist, kann für diese Ausführungsform eine 3-Stufen-Abdichtung erzielt werden. Entsprechend einschlägiger Normen (vgl. beispielsweise DIN 7757) kann zwischen der Stirnfläche des Reifenventilstößels und der Stirnfläche des Reifenventilrohres eine Abweichung von ca. 0,9 mm auftreten. Selbst wenn eine solche Abweichung gegeben ist, erlaubt die genannte Komprimierbarkeit von wenigstens ca. 1,5 mm, daß beim Aufschrauben der Ventilkappe auf das Ventilrohr in der ersten Stufe eine druckdichte Abdichtung zwischen Ventilrohr und dem offenen Gehäuseende der Ventilkappe geschaffen wird, bevor der Reifenventilstößel betätigt wird. Ein Entweichen von Druckgas aus dem Reifen in die umgebende Atmosphäre wird dadurch vermieden. Damit ist die erfindungsgemäße Ventilkappe auch für solche Reifen geeignet, die anstelle von Druckluft ein anderes, wesentlich teureres Gas enthalten.

In einer zweiten Stufe des Aufschraubens der Ventilkappe auf das Reifenventilrohr öffnet das Betätigungsglied das Reifenventil. Zumeist handelt es sich beim Betätigungs glied um einen fest mit dem Ventilkappengehäuse verbundenen Vorsprung oder Zapfen, der am Reifenventilstößel anstößt und diesen beim weiteren Aufschrauben der Ventilkappe auf das Reifenventilrohr niederdrückt.

Durch das nunmehr geöffnete Reifenventil strömt das Druckmedium solange durch die Bohrung in der Gehäusewand in die zweite Kammer und durch wenigstens einen im Gehäusematerial ausgesparten Kanal in die erste Kammer, bis in diesen beiden Kammern ebenfalls der Reifendruck herrscht. Durch eine entsprechende Ausbildung der jeweiligen Strömungsmittelpfade kann eine einseitige und/oder schlagartige Belastung der Membran vermieden werden. Auch mach Beaufschlagung der Membran mit dem Reifendruck ist die Membran keiner besonderen oder zusätzlichen mechanischen Belastung ausgesetzt, weil auf jeder Seite der Membran der gleiche Reifendruck herrscht.

In einer dritten Stufe des Aufschraubens der Ventilkappe auf das Reifenventilrohr wird nunmehr das Dichtungsstück von einem Abschmitt der Stirnfläche des Reifenventilrohres oder von einem anderen Ventilabschnitt gegen die Gehäusewand gepreßt und sperrt dort die durch diese Gehäusewand hindurchführende Bohrung druckdicht. Damit ist innerhalb der zweiten Kammer ein dem Reifen-Solldruck entsprechender Referenzdruck dauerhaft eingestellt.

Wie aus der nachstehenden detaillierten Beschreibung bevorzugter Ausführungsformen noch deutlicher hervorgeht, begrenzt die Membran diese mit dem Referenzdruck beaufschlagte Kammer.

Auf der anderen Seite der Membran innerhalb der ersten Kammer herrscht der aktuelle Reifendruck. Bei einer Abnahme des aktuellen Reifendrucks bewirkt der Referenzdruck eine Auslenkung der Membran in Richtung auf die Sichtblende zu, die als Anzeige einer Abnahme des aktuellen Reifendruckes gegenüber dem Reifen-Solldruck dient.

Nach einer anderen vorteilhaften Ausgestaltung der Erfindung kann das Dichtungsstück ein federnd gehaltener Absperrkörper sein, der von einem Federelement gegen die Gehäusewand gepreßt wird und dabei die in die zweite Kammer führende Druckausgleichsbohrung dauerhaft sperrt. Beispielsweise kann diese Bohrung in einem zur Seitenwand des Ventilkappengehäuses parallelen, die zweite Kammer begrenzenden Gehäusewandabschnitt ausgespart sein. Als Federelement kann eine zu diesem Gehäusewandabschnitt im wesentlichen parallel ausgerichtete Blattfeder dienen, unter deren Vorsprung der Absperrkörper gegen die Bohrung gedrückt wird und diese druckdicht verschließt. Es können verschiedene Maßnahmen vorgesehen werden, um diese Blattfeder beim Aufschrauben der Ventilkappe auf das Reifenventil oder im Anschluß daran gegen deren eigenen Vorsprung auszulenken, wobei der Absperrkörper von der Bohrung getrennt wird und ein Druckausgleich zwischen der zweiten und der ersten Kammer bzw. dem offenen Reifenventil erfolgen kann. Diese Blattfeder kann beispielsweise als Federstahlband, als Tellerfeder, als Flachfederscheibe oder dergleichen ausgebildet sein.

Besonders zweckmäßig ist es, zu dieser Auslenkung der Blattfeder eine magnetische Einwirkung vorzusehen. Zu diesem Zweck kann die Blattfeder aus Federstahl oder einem anderen magnetisch anziehbaren Material bestehen und in einem zum Aufschrauben der Ventilkappe auf das Reifenventil dienenden Schlüssel wird ein Permanentmagnet vorgesehen, welcher die Blattfeder gegen deren Vorsprung soweit auslenkt, daß der von der Blattfeder gehaltene Absperrkörper von seinem Ventilsitz an der Druckausgleichsbohrung zur zweiten Kammer abgehoben wird. Alternativ kann die Blattfeder aus Permanentmagnetmaterial bestehen oder mit einem zusätzlichen kleinen Permanentmagneten versehen sein, und durch Annäherung von Eisenmaterial oder von Permanentmagnetmaterial entgegengesetzter Polarität kann die Blattfeder entsprechend ausgelenkt werden, um den anfänglichen Druckausgleich durchzuführen.

Nach noch einer anderen vorteilhaften Ausgestaltung der Erfindung kann das Dichtungsstück ein in Richtung auf die zweite Kammer zu vorgespanntes Klappen- oder Flatterventil sein. Als Vorspannelement kann eine Feder, ein Stempel aus flexiblem Material oder dergleichen dienen. Die Vorspannung dieses Vorspannelementes soll ausreichend groß sein, um den durch Temperaturänderungen und/oder Belastung und Benutzung auftretenden Erhöhungen des Reifendruckes standzuhalten. Andererseits darf diese Vorspannung nicht so groß sein, daß sie zu einer nennenswerten Abweichung des Referenzdruckes in der zweiten Kammer vom Reifen-Solldruck führt. Nachdem das Betätigungsglied den Reifenventilstößel niedergedrückt hat, wird der deutlich höhere Reifendruck auf jeden Fall die Vorspannung des Klappen- oder Flatterventils überwinden, so daß der Druck in der zweiten Kammer ansteigt. Ein langsam oder träge arbeitendes Vorspannelement gewährleistet eine Angleichung des Referenzdruckes in der zweiten Kammer an den Reifen-Solldruck.

Anstelle eines solchen komprimierbaren Absperrkörpers oder eines einseitig vorgespannten Klappen- oder Flatterventils können auch andere übliche Ventileinrichtungen vorgesehen werden, die eine Fluidströmung lediglich in einer Richtung zulassen, wie beispielsweise mit einer Kugel arbeitende Rückschlagventile.

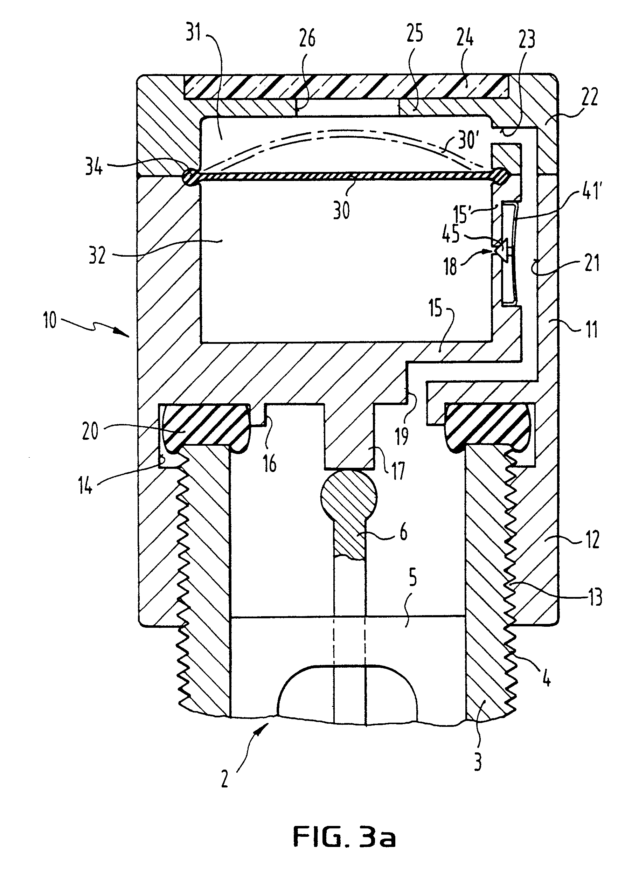

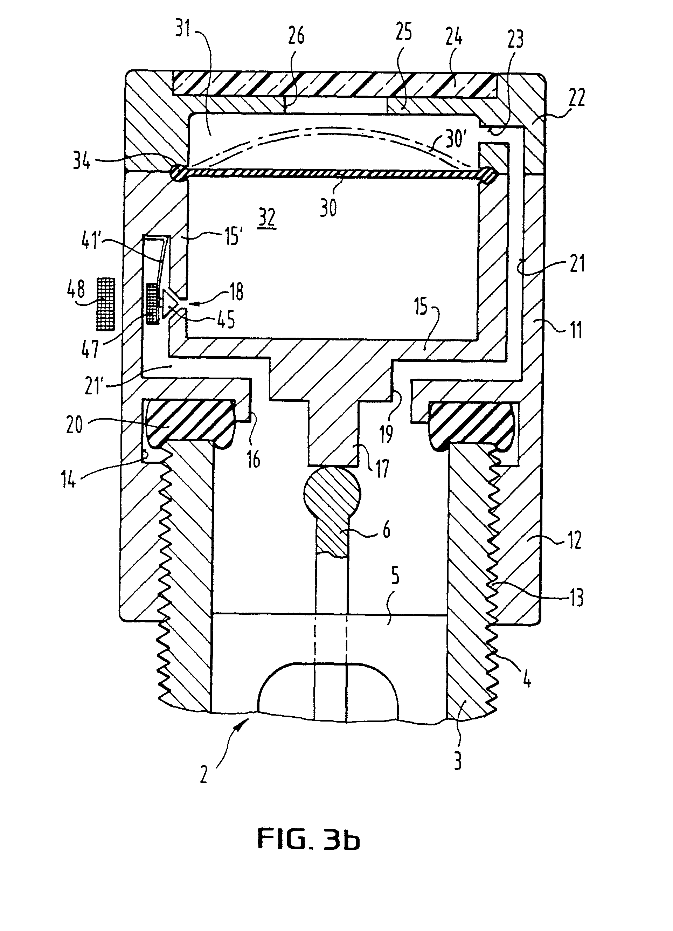

Bei der vorstehend erläuterten Ausführungsform der erfindungsgemäßen Ventilkappe bewirkt das Aufschreiben der Ventilkappe auf das Reifenventilrohr zuerst die gegenseitige Abdichtung und daraufhin die Öffnung des Reifenventils. Diese beiden Funktionen können auch getrennt werden. Eine entsprechende, alternative Ausführungsform der Ventilklappe weist einen auf das Reifenventilrohr aufschraubbaren Schraubteil und einen gegenüber diesem Schraubteil verschieblichen Anzeigeteil auf. Nach erfolgter druckdichter Abdichtung zwischen Reifenventilrohr und Schraubteil drückt eine weitere Verstellung des Anzeigeteils den Reifenventilstößel nieder und öffnet das Reifenventil. Hierzu können Vorsprünge am Anzeigeteil in Führungen am Umfang des Schraubteils eingreifen, die schraubenlinienförmig auf das offene Ende des Schraubteils zuführen und in einem Bajonette-Verschluß enden. Vorzugsweise ist die alternative Ausgestaltung vorgesehen, bei welcher Vorsprünge am Schraubteil in eine schraubenlinienförmige Führung an der Innenseite eines zylindrischen Ansatzes am Anzeigeteil eingreifen, wie das nachstehend noch im einzelnen mit Bezugnahme auf Fig. 3 erläutert wird. Zuerst wird das - vorzugsweise mit einer entsprechenden, axial ausgerichteten Riffelung versehene - Schraubteil fest auf das Reifenventilrohr aufgeschraubt, bis das Dichtungselement einen entsprechenden, die sichere Abdichtung gewährleistenden Widerstand entgegensetzt. Daraufhin erfolgt eine Verschwenkung des Anzeigeteils gegenüber dem festsitzenden Schraubteil, der mit einer Bewegung auf das Reifenventil zu verbunden ist. Bei dieser auf das Reifenventil zuführenden Bewegung drückt das fest mit dem Anzeigeteil verbundene Betätigungsglied den Reifenventilstößel nieder und öffnet das Reifenventil. Dichtmittel an den Gleitflächen zwischen Schraubteil und Anzeigeteil gewährleisten einerseits gegemseitige Verschwenkbarkeit und andererseits druckdichte Abdichtung zwischen diesen beiden Bauteilen. Diese Ausführungsform schafft größte Sicherheit dafür, daß zuerst die Ventilklappe druckdicht gegenüber dem Reifenventil abgedichtet, und erst dann das Reifenventil geöffnet wird. Ein Verlust von wertvollem Druckmedium im Reifeninneren wird sicher vermieden.

Das Dichtungsstück dieser besonderen, aus Schraubteil und dem gegenüber verschieblichen Anzeigeteil bestehenden Venteilkappe kann aus einem komprimierbaren Absperrkörper bestehen oder aus einem in Richtung auf die zweite Kammer zu vorgespannten Klappen- oder Flatterventil, wie es bereits oben erläutert wurde, oder aus anderer üblicher, lediglich eine Fluidströmung in eine Richtung zulassenden Ventileinrichtung.

Die auslenkbare Membran der erfindungsgemäßen Ventilkappe ist vorzugsweise eine Tellermembran mit einem Randwulst, der in einer Aussparung am Innenumfang des Ventilkappengehäuses festgelegt wird. Als Membranmaterialien kommen Naturkautschuk, verschiedene Gummisorten und weich eingestellte Kunststoffe in Betracht. Für die Membran wird eine vergleichsweise große Auslenkung bei geringer Krafteinwirkung angestrebt. Vorzugsweise soll eine Abnahme des Reifendrucks um je 0,1 bar eine angenähert lineare Auslenkung der Membran um etwa 1 bis 2 mm bewirken. Die erfindungsgemäße Ventilkappe soll wenigstens eine Druckabnahme um 0,3 bar deutlich sichtbar und leicht ablesbar anzeigen. Eine solche Druckabnahme wird wenigstens eine Auslenkung der Membran um 2 bis 3 mm aus ihrer Ruhelage hervorrufen. Um die Erkennbarkeit einer solchen Membranauslenkung zu verbessern, sind erfindungsgemäß mehrere Maßnahmen vorgesehen.

- Das durchsichtige geschlossene Ende des Ventilkappengehäuses wird mit einem undurchsichtigen Material belegt, das lediglich den Durchblick durch eine begrenzte Blendenöffnung zuläßt. Der Durchmesser der vorzugsweise kreisrunden Blendenöffnung beträgt vorzugsweise 2 bis 4 mm;
- in ihrer Ruhelage befindet sich die Membran in einem Abstand von etwa 1,5 bis 4,0 mm zu diesem durchsichtigen Gehäuseabschnitt.
- Das Membranmaterial ist vorzugsweise eingefärbt und weist eine Signal- oder Kontrastfarbe bezüglich seiner Umgebung, insbesondere des Sichtblendenmaterials auf.

Bei Einhaltung dieser Bedingungen ist auch eine Membranverstellung von lediglich 1 bis 2 mm außerordentlich gut zu erkennen, so daß eine deutlich sichtbare und leicht ablesbare Anzeige geschaffen wird.

Beispielsweise kann sich eine rot eingefärbte Membran innerhalb eines schwarzen Gehäuses befinden, das eine durchsichtige Blendenöffnung mit einem Durchmesser von 3 mm aufweist. Im Ruhezustand befindet sich die Membran in einem Abstand von 2 mm zu dieser Blendöffnung und ist in dem dunklen, vom schwarzen Gehäusematerial umgrenzten Raum nicht zu erkennen. Nach Auslenkung der Membran um 1 bis 2 mm wird innerhalb der Blendenöffnung ein roter Fleck sichtbar, der auch aus größerer Entfernung, beispielsweise aus gebückter Haltung als Anzeige für eine Druckminderung wahrnehmbar ist.

Nachstehend wird die Erfindung mehr im einzelnen anhand bevorzugter Ausführungsformen mit Bezugnahme auf die Zeichnungen erläutert; die letzteren zeigen:

Fig. 1 in schematischer Darstellung eine erste Ausführungsform einer erfindungsgemäßen Ventilkappe, deren Dichtungsstück als einseitig vorgespanntes Klappenventil ausgebildet ist;

Fig. 2 in schematischer Darstellung eine zweite Ausführungsform einer erfindungsgemäßen Ventilkappe, deren Dichtungsstück als komprimierbarer Absperrkörper ausgebildet ist;

Fig. 3a und 3b in einer schematischen Darstellung eine dritte Ausführungsform einer erfindungsgemäßen Ventilkappe, deren Dichtungskörper ein von einer Blattfeder gehaltener Absperrkörper ist, die unter magnetischer Einwirkung gegen ihre eigene Vorspannung auslenkbar ist; und

Fig. 4 in schematischer Darstellung eine vierte Ausführungsform einer erfindungsgemäßen Ventilkappe, die aus einem Schraubteil und einem demgegenüber verschieblichen Anzeigeteil besteht.

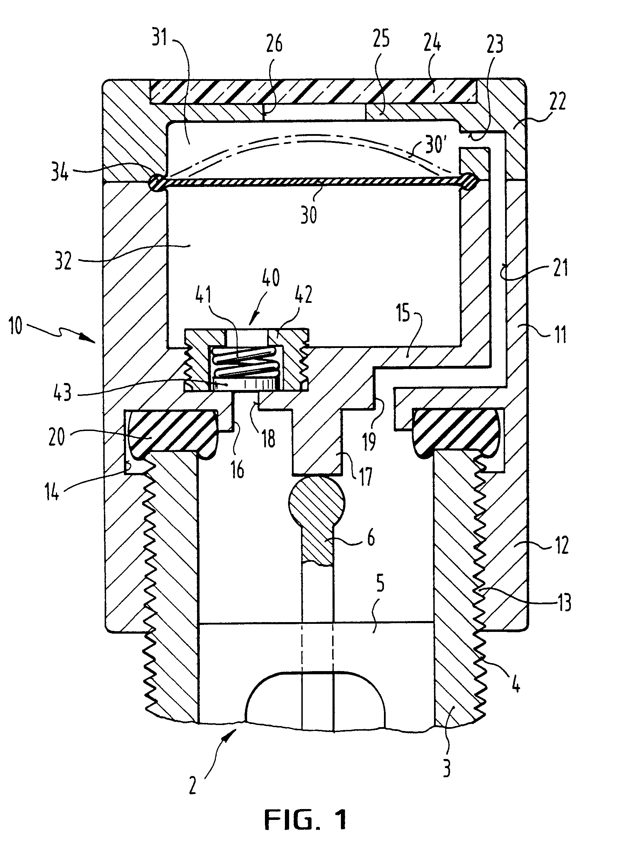

Die Fig. 1 zeigt eine Ventilkappe 10, die auf das Ventilrohr 3 eines herkömmlichen Reifenventils 2 aufgeschraubt ist. Innerhalb des mit einem Außengewinde 4 versehenen Ventilrohres 3 befindet sich eine Halterung oder Brücke 5 für den verschieblich unter der Vorspannung einer (nicht dargestellten) Feder gehaltenen Ventilstößel 6.

Zu den wesentlichen Bestandteilen der Ventilkappe 10 gehören das Ventilkappengehäuse 11, das Dichtungselement 20, die Membran 30 und das Dichtungsstück 40. Das Gehäuse 11 weist ein offenes Ende 12 und ein geschlossenes Ende 22 auf. Das offene Gehäuseende 12 ist mit einem Innengewinde 13 versehen, das an das Außengewinde 4 üblicher Reifenventile 2 angepaßt ist. Etwa mittig verläuft quer zur axialen Richtung eine Gehäusequerwand 15, von der in Richtung auf das offene Gehäuseende 12 zu ein umlaufender Steg 18 und das als Stempel ausgebildete Betätigungsglied 17 abstehen. Anschließend an die Gehäusequerwand 15 ist aus der Innenwand des Gehäuses Material ausgespart, so daß eine Aussparung 14 für die Aufnahme des Dichtungselementes 20 resultiert. Bei diesem Dichtungselement 20 kann es sich beispielsweise um einen O-Ring oder einen Quad-Ring aus komprimierbarem Material mit einer Stärke von 2 bis 4 mm handeln, der in der Anlage am Steg 18 gehalten wird. Die Querschnittsabmessungen der Aussparung 14 übersteigen den Querschnitt des Dichtungselementes 20, so daß, ausreichend Platz für eine elastische Verformung des Dichtungselementes 20 gegeben ist.

Durch die Gehäusequerwand 15 führen eine Bohrung 18 und wenigstens ein Einlaß 19 hindurch, der zu wenigstens einem Kanal führt, der im Gehäusematerial ausgespart ist.

In der dargestellten Ausführungsform besteht das Ventilkappengehäuse 11 im wesentlichen aus einer mit einer, mittig angeordneten Querwand 15 versehenen Hülse. Vorzugsweise ist diese Hülse ein Spritzgußkörper aus Kunststoff. In das geschlossene Gehäuseende 22 ist eine durchsichtige Abdeckplatte 24 druckdicht eingesetzt. An der Innenseite der Abdeckplatte 24 liegt eine undurchsichtige Blende 25 an, die lediglich eine kreisrunde Blendenöffnung 18 freiläßt. Bei der dargestellten Ausführungsform hat diese Blendenöffnung 28 einen Durchmesser von etwa 3 mm.

In eine umlaufende Aussparung an der Innenwand des geschlossenen Gehäuseteils 22 ist der Randwulst 34 einer Membran 30 eingesetzt. Diese Membran 30 unterteilt den Gehäuseinnenraum in eine erste Kanner 31 benachbart zum geschlossenen Gehäuseende 22 mit dem durchsichtigen Abschnitt 24 und in eine zweite Kammer 32, die über die Bohrung 18 in der Gehäusequerwand 15 und über das offene Reifenventil 2 mit dem Reifeninneren kommuniziert. Der Kanal 21 mündet über den Auslaß 23 in die erste Kanner 31, so daß bei einem geöffneten Reifenventil eine permanente Strömungsmittelverbindung zwischen dem Reifeninneren und der ersten Kammer 31 besteht.

In die Bohrung 18 bzw. in den vom offenen Gehäuseende 12 zur zweiten Kammer 32 führenden Strömungsmittelpfad ist das Dichtungsstück 40 eingesetzt. In der dargestellten Ausführungsform handelt es sich beim Dichtungsstück 40 um ein Klappenventil das in Richtung auf die zweite Kammer 32 zu vorgespannt ist. Wie dargestellt, kann das gesamte Klappenventil in eine Aussparung in der Gehäusequerwand 15 eingeschraubt sein. Als Vorspannelenemt dient eine schematisch angedeutete Schraubenfeder 41, die sich einerseits an einem umlaufenden Vorsprung 42 und andererseits an der Oberseite der Klappe 43 abstützt. Das einseitig vorgespannte Klappenventil erlaubt einen Strömungsmitteldurchtritt aus dem offenen Gehäuseende 12 in die zweite Kammer 32, um nach Öffnung des Reifenventils 2 innerhalb der zweiten Kammer 32 den Referenzdruck einzustellen, welcher dem vorgegebenen, als Reifen-Solldruck dienenden Reifendruck entspricht. Bei einer Abnahme des Reifendruckes bleibt die Ventilkappe 43 unter der Wirkung der Feder 41 geschlossen, so daß eine Rückströmung von Druckmedium verhindert wird. Weil der Referenzdruck innerhalb der zweiten Kammer 32 konstant bleibt, andererseits der aktuelle Reifendruck und der mit diesem übereinstimmende Druck in der ersten Kammer 31 gegebenenfalls abnimmt, führt die resultierende Druckdifferenz zu einer Auslenkung der Membran 30 in Richtung auf die Blendenöffnung 26 zu, wie das schematisch mit der gestrichelten Membran 30' dargestellt ist. Die vorzugsweise rot eingefärbte, ausgelenkte Membran 30' wird nun durch die Blendenöffnung 26 in der durchsichtigen Abdeckplatte 24 hindurch sichtbar, was als Anzeichen für eine Druckminderung dient.

In der Darstellung nach Fig. 1 ist die Ventilkappe 10 vollständig auf das Ventilrohr des Reifenventils 2 aufgeschraubt, so daß das Dichtungsstück 20 erheblich komprimiert ist, und das Betätigungsglied 17 den Reifenventilstößel 8 soweit niederdrückt, damit der im Reifeninneren herrschende Druck sowohl die erste Kammer 31 wie die zweite Kammer 32 beaufschlagt.

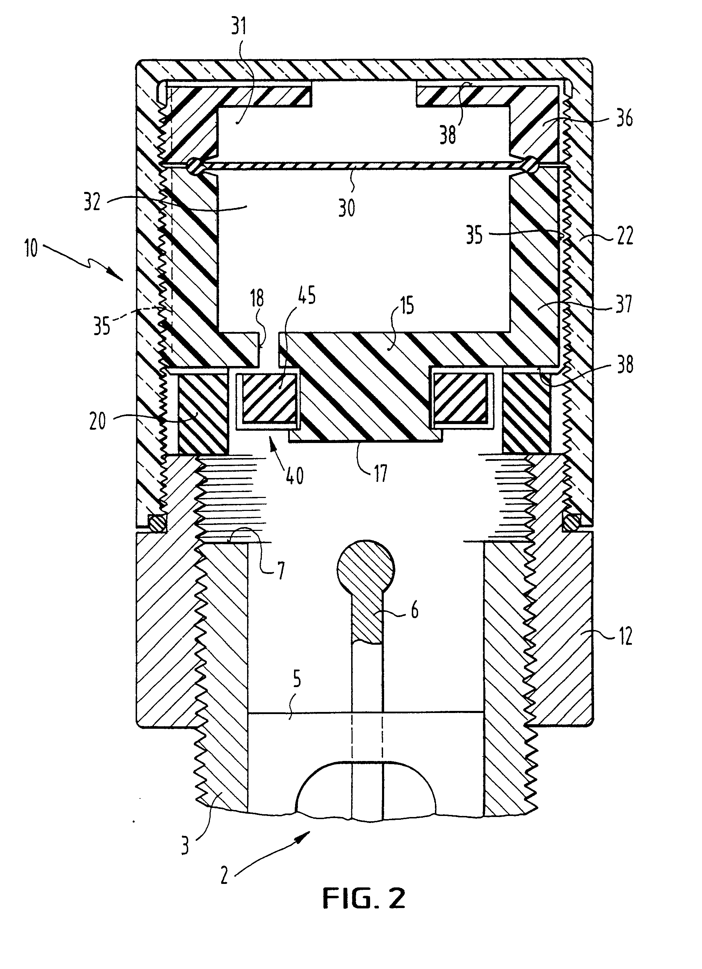

Die Fig. 2 zeigt eine ähnlich aufgebaute Ventilkappe 10, die lediglich teilweise auf ein Reifenventil 2 aufgeschraubt ist. Die Stirnwand 7 des Reifenventilrohres 3 liegt noch nicht an Dichtungselement 20 an. Der Reifenventilstößel 8 wird von einer (nicht dargestellten) Ventilfeder in der Schließstellung gehalten. Abweichend zu der oben mit Bezugnahme auf Fig. 1 erläuterten Ausführungsform dient hier als Dichtungsstück 40 ein Absperrkörper 45, der gegen die Bohrung 18 in der Gehäusequerwand 15 preßbar ist, um diese Bohrung 18 zu sperren, nachdem in der zweiten Kammer 32 der Referenzdruck aufgebaut worden ist.

Bei dieser Ausführungsform besteht das Gehäuse aus dem hülsenförmigen offenen Gehäuseende 12 und einem geschlossenen Gehäuseende 22 aus durchsichtigem Kunststoff, das auf das hülsenförmige Gehäuseteil 12 aufschraubbar ist. In das geschlossene, durchsichtige Gehäuseende 22 sind zwei Einsätze 36 und 37 eingeschraubt, welche die erste Kammer 31 und die zweite Kammer 32 begrenzen. Wiederum trennt eine auslenkbare Membran 30 diese beiden Kammern voneinander. Schematisch angedeutete, in axialer Richtung verlaufende Aussparungen 35 am Außenumfang der Einsätze 36 und 37 und weitere Durchlässe 38 schaffen eine dauerhaft offene Strömungsmittelverbindung aus dem Innenraum des offenen Gehäuseendes 12 zur ersten Kammer 31.

Aufgrund der jeweiligen Abmessungen und gegenseitigen Anordnung von Dichtungsstück 20, Betätigungsglied 17 und Absperrkörper 45 erlaubt diese Ausführungsform eine 3-Stufen-Abdichtung beim Aufschrauben der Ventilkappe 10 auf das Reifenventil 2. Ausgehend von der in Fig. 2 dargestellten Stellung wird beim weiteren Aufschrauben die Stirnfläche 7 des Reifenventilrohres 3 das Dichtungselement 20 kontaktieren und komprimieren. Weil die Stirnfläche des Betätigungsgliedes 17 gegenüber der Dichtfläche des Dichtungselementes 20 zurückgesetzt wird, berührt das Betätigungsglied 17 den Reifenventilstößel 6 erst nach ausreichender, eine druckdichte Abdichtung gewährleistende Komprimierung des Dichtungselementes. Erst dann wird das Betätigungsglied 17 beim weiteren Aufschrauben der Ventilkappe den Reifenventilstößel 6 niederdrücken und damit das Reifenventil öffnen. Nach Öffnung des Reifenventils 2 wird der Reifendruck über die zu diesem Zeitpunkt offene Bohrung 18 in die zweite Kammer 32 und über entsprechende Strömungsmittelverbindungen 35, 38 in die erste Kammer 31 weitergeleitet. Damit kann sich in der zweiten Kammer 32 der Referenzdruck einstellen.

Beim noch weiteren Aufschrauben der Ventilkappe kontaktiert schließlich ein Abschnitt der Stirnfläche 7 des Reifenventilrohres 3 den Absperrkörper 45 und bringt diesen zur Anlage an der Gehäusequerwand 15, um die Bohrung 18 zu sperren. Alternativ könnte der Absperrkörper 45 an der den Ventilstößel 6 führenden Brücke 5 abgestützt sein.

In der Fig. 2 sind aus Gründen einer übersichtlichen Darstellung die Unterschiede der Abmessungen zwischen Dichtungselement 20, Betätigungsglied 17 und Absperrkörper 45 übertrieben groß dargestellt. In der Praxis reicht ein Weg von etwa 1,5 bis 2,5 mm vollständig aus, um eine druckdichte Abdichtung zwischen Ventilkappe 10 und Reifenventil 2 hervorzurufen, um das Reifenventil 2 zu öffnen und um die Bohrung 18 mittels des Absperrkörpers 45 zu sperren.

Die Fig. 3a zeigt eine weitere Ausführungsform einer erfindungsgemäßen Ventilkappe, die weitgehend der oben mit Bezugnahme auf Fig. 1 erläuterten Ventilkappe entspricht; abweichend ist eine andere Ventilanordnung vorgesehen. Bei dieser Ausführungsform nach Fig. 3a ist die Gehäusequerwand 15 geschlossen und die Druckausgleichsbohrung 18 für die zweite Kammer 32 befindet sich in einem die zweite Kammer 32 begrenzenden Gehäusewandabschnitt 15', der im wesentlichen parallel zur Seitenwand des Ventilkappengehäuses 11 ausgerichtet ist. Diese Bohrung 18 steht in Strömungsverbindung mit dem nicht verschließbaren Kanal 21, so daß der im Reifeninneren herrschende Druck über das offene Reifenventil 2, den Kanal 21 und die Bohrung 18 in die zweite Kammer 32 weitergeleitet werden kann, sofern die Bohrung 18 nicht verschlossen ist.

An der Bohrung 18 ist ein konisches Ventilsitzprofil ausgebildet, an dem ein angepaßt konischer Absperrkörper 45 anliegen kann. Dieser Absperrkörper 45 ist an einer Blattfeder 41' angebracht, die im wesentlichen parallel zu dem Gehäusewandabschnitt 15' ausgerichtet und mit ihren Enden an diesen befestigt ist. Es ist eine solche Ausgestaltung und Anordnung von Absperrkörpern 45 und Blattfeder 41' gewählt, daß die Vorspannung der Blattfeder 41' den Absperrkörper 45 gegen seinen Ventilsitz drückt und die Bohrung 18 sperrt. Beispielsweise kann eine solche Ventilanordnung mit Absperrkörper 45 und zusätzlichem Dichtmaterial am Ventilsitzprofil innerhalb der Bohrung 18 gewählt werden, wie sie in herkömmlichen Ein-Weg-Feuerzeugen, mit Flüssiggas-Füllung realisiert ist. Eine solche Ventilanordnung schafft mit einfachen Mitteln auf engstem Raum eine dauerhaft druckdichte Anordnung.

Um beim Aufschrauben der Ventilkappe 10 auf das Reifenventil 2 oder im Anschluß daran die zweite Kammer 32 mit dem im Reifeninneren herrschenden Reifen-Solldruck zu beaufschlagen, muß die Blattfeder 41 - gegen ihre eigene Vorspannung - aus ihrer Normallage abgelenkt werden um den Absperrkörper 45 aus seinem Ventilsitz an der Bohrung 18 zu lösen. Vorzugsweise ist zur Auslenkung eine magnetische Einwirkung auf die Blattfeder 41' vorgesehen, weil eine solche magnetische Einwirkung durch das geschlossene Ventilgehäuse 11 möglich ist. Zu diesem Zweck kann die Blattfeder 41' aus Federstahl oder inem anderen magnetisch anziehbaren Material bestehen, und in einen zum Aufschrauben der Ventilkappe 10 auf das Reifenventil 2 dienenden - nicht dargestellten - Schlüssel wird ein Permanentmagnet vorgesehen, welcher die Blattfeder 41' gegen deren Vorsprung soweit auslenkt, daß der von der Blattfeder 41' gehaltene Absperrkörper 45 von seinem Ventilsitz an der Druckausgleichsbohrung 18 zur zweiten Kammer 32 abgehoben wird. Alternativ kann die Blattfeder 41' aus Permanentmagnetmaterial bestehen oder mit einem - nicht dargestellten - zusätzlichen kleinen Permanentmagneten versehen sein, und durch Annäherung von Eisenmaterial oder von Permanentmagnetmaterial entgegengesetzter Polarität kann die Blattfeder 41' entsprechend ausgelenkt werden, um den anfänglichen Druckausgleich durchzuführen. In jedem Fall ist eine kurzfristige magnetische Einwirkung vorgesehen, die ausreicht, die zweite Kammer 32 mit dem Reifen-Solldruck zu beaufschlagen. Nach Beendigung der magnetischen Einwirkung kehrt die Blattfeder 41' wieder in ihre Normallage zurück und drückt den Absperrkörper 45 in seinen Ventilsitz an der Bohrung 18, wodurch die zweite Kammer 32 druckdicht verschlossen wird. Anschließend herrscht in der zweiten Kammer 32 dauerhaft der dem Reifen-Solldruck entsprechende Referenzdruck.

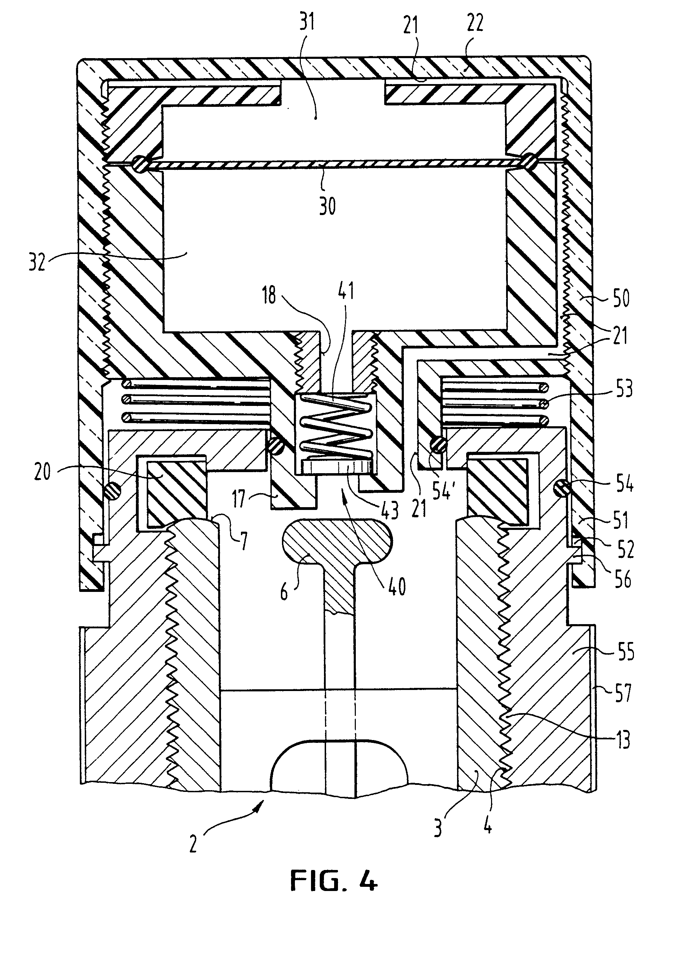

Die Fig. 3b zeigt eine Abwandlung der erfindungsgemäßen Ventilkappe nach Fig. 3a. Hier ist die Blattfeder 41' mit dem Absperrkörper 45 nicht im Bereich des Kanals 21 angeordnet, sondern es ist ein zusätzlicher, die Druckausgleichsbohrung 18 mit dem Innenraum des Reifenventils 2 verbindender Kanal 21' vorgesehen. Die Blattfeder 41' ist einseitig eingespannt. Am freien Blattfederende ist auf der einen Seite - benachbart zur Bohrung 18 - der Absperrkörper 45 angebracht und auf der anderen Seite ein kleiner, scheibenförmiger Permanentmagnet 47, beispielsweise ein handelsüblich zugänglicher Meßmagnet 47 aus einem Magnetmaterial mit hoher Koerzitivkraft angebracht. In der Normallage drückt die Vorspannung der Blattfeder 41' den Absperrkörper 45 in den angepaßten konischen Ventilsitz an der Bohrung 18 und verschließt diese druckdicht. Durch Annäherung von Weicheisenmaterial 48 oder dergleichen kann die Blattfeder gegen ihre eigene Vorspannung aus der Normallage ausgelenkt und der Absperrkörper 45 von seinem Ventilsitz gelöst werden, wie das in Fig. 3b schematisch dargestellt ist. Die Fig. 4 zeigt noch eine weitere Ausführungsform einer erfindungsgemäßen Ventilkappe. Abweichend zu den vorstehend mit Bezugnahme auf die Fig. 1, 2 und 3a, 3b erläuterten Ventilkappen weist diese Ausführungsform ein Anzeigeteil 50 auf, das gegenüber einem Schraubteil 55 verschieblich angeordnet ist. Aufgabe und Funktion des Schraubteils 55 stimmen mit denjenigen des offenen Gehäuseendes der vorstehend erläuterten Ausführungsformen überein. Mit einem Innengewinde 13 wird das Schraubteil 55 auf das Außengewinde 4 am Ventilrohr 3 des Reifenventils 2 aufgeschraubt. Ein Dichtungselement 20 sorgt für eine druckdichte Abdichtung.

Das Anzeigeteil 50 besteht im wesentlichen aus einem geschlossenen Gehäuseende 22 aus durchsichtigem Kunststoff. Der Gehäuseinnenraum wird durch eine Membran 30 in eine erste Kammer 31 und in eine zweite Kammer 32 unterteilt, die über eine Bohrung 18 eine Strömungsmittelverbindung zum Innenraum des Schraubteils 55 erlaubt. In die Bohrung 18 ist ein Dichtungsstück 40 eingesetzt, im vorliegenden Fall ein in Richtung auf die zweite Kammer 32 zu vorgespanntes Klappenventil. Ein Kanal 21 schafft eine permanente Strömungsmittelverbindung zur ersten Kammer 31. Ein zylindrischer Ansatz 51 am Anzeigeteil 50 umgreift teilweise das Schraubteil 55. Ein Vorsprung 56 am Außenumfang des Schraubteils 55 ragt in eine Nut 52 hinein, die an der Innenseite des zylindrischen Ansatzes 51 ausgespart ist. Diese Nut 52 ist schraubenlinienförmig geführt, so daß bei einer Drehung des Anzeigeteils 50 gegenüber dem fest auf das Reifenventil 2 aufgeschraubten Schraubteil 55 das Anzeigeteil 50 eine auf das Schraubteil 55 zu gerichtete - oder bei entgegengesetztem Drehsinn eine von diesem Schraubteil 55 weg gerichtete - Bewegung ausführen kann. Eine innerhalb des zylindrischen Ansatzes 51 untergebrachte Feder 53 hält das Anzeigeteil 50 auf Distanz zum Schraubteil 55. Dichtungsmittel 54 und 54' sorgen für eine druckdichte Abdichtung zwischen einander gegenüber befindlichen Gleitflächen zwischen Anzeigeteil 50 und Schraubteil 55.

Zur Benutzung wird zuerst das Schraubteil 55 auf das Ventilrohr 3 eines Reifenventils 2 aufgeschraubt, bis die Ventilrohr-Stirnfläche 7 das Dichtungselement 20 komprimiert, um eine druckdichte Abdichtung zu gewährleisten. Eine in axialer Richtung verlaufende Riffelung 57 am Aussenumfang des Schraubteils 55 erleichtert das Aufschrauben. Daraufhin wird das Anzeigeteil 50 gegenüber dem fest sitzenden Schraubteil 55 gedreht und dabei auf das Reifenventil 2 zu bewegt. Das am Anzeigeteil 50 festangebrachte Betätigungsglied 17 drückt den Stößel 6 des Reifenventils 2 nieder und öffnet dieses Ventil. Unter der Wirkung des Reifendrucks wird die Klappe 43 des Klappenventils gegen die Vorspannung des Vorspannelementes 41 von ihrem Ventilsitz gelöst, so daß sich in der zweiten Kammer 32 der dem Reifendruck entsprechende Referenzdruck aufbauen kann. Der Vorsprung 58 am Schraubteil 55 rastet schließlich in eine gegebene Raststelle ein und fixiert das Anzeigeteil 50 in dieser, das Reifenventil 2 offenhaltenden Stellung gegenüber dem Schraubteil 55.

Eine solche Fixierung, in welcher das Reifenventil stets offen gehalten wird, ist jedoch nicht zwingend.

Nachdem bei einer Ausführungsform entsprechend Fig. 4 durch Verstellung eines Anzeigeteils das Reifenventil geöffnet, in der zweiten Kammer der Referenzdruck aufgebaut und diese zweite Kammer dauerhaft verschlossen worden ist, kann durch entgegengesetzte Verstellung das Reifenventil wieder geschlossen und das Anzeigeteil unter der Wirkung eines Federelementes in seiner Ausgangsstellung gehalten werden. Wegen der Dichtigkeit der gesamten Anordnung herrscht in der ersten Kammer ebenfalls der ursprüngliche Reifendruck, so daß die Membran im wesentlichen unbelastet bleibt. Um zu einem späteren Zeitpunkt zu prüfen, ob der dann aktuelle Reifendruck noch dem Reifen-Solldruck entspricht, wird erneut das Anzeigeteil verstellt und das Reifenventil geöffnet. Der aktuelle Reifendruck beaufschlagt die erste Kammer, ohne den Referenzdruck in der zweiten Kammer zu verändern, und eine gegebenenfalls sichtbar werdende Membranauslenkung zeigt eine Druckminderung an, wenn der aktuelle Reifendruck niedriger ist als der dem Referenzdruck in der zweiten Kammer entsprechende Reifen-Solldruck.

Wie dargelegt, ist die Erfindung mit Bezugnahme auf bevorzugte Ausführungsformen erläutert worden. Für Fachleute ist ersichtlich, daß verschiedene Abänderungen und Modifizierungen der erläuterten Ausführungsformen möglich sind, ohne vom wesentlichen Kern der Erfindung abzuweichen. Auch diese Abänderungen und Modifizierungen sollen vom Gegenstand der vorliegenden Erfindung umfaßt sein, soweit sie sich unter den Inhalt der Patentansprüche und deren Äquivalente subsumieren lassen.

**Patentansprüche**

1. Eine Druckminderungsanzeige liefernde Ventilkappe für einen mit einem Ventil (2) ausgerüsteten Luftreifen, mit einem einseitig geschlossenen, auf ein Ventilrohr (3) des Reifenventils (2) aufschraubbaren Gehäuse (11),

ferner mit einem das Ventilrohr (3) gegenüber dem offenen Gehäuseende der aufgeschraubten Ventilkappe abdichtenden Dichtungselement, (20),

weiterhin mit einem, das Reifenventil (2) öffnenden Betätigungsglied (17), und

mit einer als Anzeige dienenden auslenkbaren Membran (30), die den Gehäuse-Innenraum in eine erste, benachbart zu einen durchsichtigen Abschnitt (24, 26) des geschlossenen Gehäuseendes befindliche Kammer (31) und in eine zweite Kammer (32) unterteilt, die über eine Bohrung (18) in einer Gehäusewand (15, 15') und über das offene Reifenventil (2) mit dem Reifeninneren kommuniziert,

dadurch gekennzeichnet, daß

die Bohrung (18) in der Gehäusewand (15, 15') mittels eines Dichtungsstückes (40) dicht verschließbar ist; zwischen der ersten Kammer (31) und dem offenen Reifenventil (2) wenigstens ein im Gehäusematerial ausgesparter, nicht verschließbarer Kanal (21, 35, 38) vorhanden ist; und

bei einem gegenüber dem Ausgangszustand geringeren Reifendruck die Membran (30) sich in einer dem durchsichtigen Gehäuseabschnitt (24) angenäherten Stellung befindet.

2. Die Ventilkappe nach Anspruch 1,
dadurch gekennzeichnet, daß
das Dichtungselement (20) beim Aufschrauben der Ventilkappe (10) auf das Ventilrohr (3) des Reifenventils (2) um wenigstens 1,5 bis 2 mm komprimierbar ist.

3. Die Ventilkappe nach Anspruch 1 oder 2,
dadurch gekennzeichnet, daß
das Dichtungselement (20) in eine ringförmige Aussparung (14) eingesetzt ist, deren Querschnittsabmessungen den Dichtungselement-Querschnitt übersteigen.

4. Die Ventilkappe nach einem der Ansprüche 1 bis 3,
dadurch gekennzeichnet, daß
das Betätigungsglied (17) beim Aufschrauben der Ventilkappe (10) auf das Reifenventilrohr (3) den Stössel (8) des Reifenventils (2) niederdrückt, nachdem das Dichtungselement (20) eine druckdichte Abdichtung zwischen Reifenventilrohr (2) und offenem Gehäuseende (12) geschaffen hat.

5. Die Ventilkappe nach einem der Ansprüche 1 bis 3,
dadurch gekennzeichnet, daß
die Ventilkappe (10) einen auf das Reifenventilrohr (3) aufschraubbaren Schraubteil (55) und einen gegenüber diesem Schraubteil verschieblichen Anzeigeteil (50) aufweist; und nach druckdichter Abdichtung zwischen Reifenventilrohr (3) und Schraubteil (55) eine Verstellung des Anzeigeteils (50) den Stößel (6) des Reifenventils (2) niederdrückt.

6. Die Ventilkappe nach einem der Ansprüche 1 bis 5,
dadurch gekennzeichnet, daß
nach Einstellung des Reifen-Solldruckes in der ersten Kammer (31) und in der zweiten Kammer (32) das Dichtungsstück (40) die zweite Kammer (32) dauerhaft verschließt.

7. Die Ventilkappe nach einem der Ansprüche 1 bis 6,
dadurch gekennzeichnet, daß
das Dichtungsstück (40) ein Absperrkörper (45) ist, der von einem Abschnitt der Reifenventilrohr-Stirnfläche (7) gegen eine quer ausgerichtete Gehäusewand (15) gepreßt wird und dabei die Bohrung (18) dauerhaft sperrt.

8. Die Ventilkappe nach einem der Ansprüche 1 bis 6,
dadurch gekennzeichnet, daß
das Dichtungsstück (40) ein federnd gehaltener Absperrkörper (45) ist, der von einem Federelement (41') gegen die Gehäusewand (15') gepreßt wird und abei die Bohrung (18) dauerhaft sperrt.

9. Die Ventilkappe nach Anspruch 8,
dadurch gekennzeichnet, daß
die Bohrung (18) in einer zur Seitenwand des Ventilkappengehäuses (11) parallelen, die zweite Kammer (32) begrenzenden Gehäusewand (15') ausgespart ist; und das Federelement eine zu dieser Gehäusewand (15') im wesentlichen parallel ausgerichtete Blattfeder (41') ist.

10. Die Ventilkappe nach Anspruch 8 oder 9,
dadurch gekennzeichnet, daß
das Federelement (41') beim Aufschrauben der Ventilkappe (10) auf das Reifenventil (2) oder im Anschluß daran aufgrund magnetischer Einwirkung gegen seine eigene Vorspannung auslenkbar ist, wobei der Absperrkörper (45) von der Bohrung (18) getrennt wird und ein Druckausgleich zwischen der zweiten Kammer (32) und der ersten Kammer (31) bzw. dem offenen Reifenventil (2) erfolgt

11. Die Ventilkappe nach einem der Ansprüche 7 bis 10,
dadurch gekennzeichnet, daß
die Bohrung (18) ein Ventilsitzprofil aufweist, und am Absperrkörper (45) ein Ventilkörperabschnitt angeformt ist, dessen Gestalt an dieses Ventilsitzprofil angepaßt ist.

12. Die Ventilkappe nach einem der Ansprüche 8 bis 11,
dadurch gekennzeichnet, daß
das Dichtungsstück ein konischer Ventilkörper (45) ist, der unter der Vorspannung des Federelementes (41') mit seiner Spitze in ein ebenfalls konisches Ventilsitzprofil gedrückt wird.

13. Die Ventilkappe nach einem der Ansprüche 1 bis 8,
dadurch gekennzeichnet, daß
das Dichtungsstück (40) ein Klappen- oder Flatterventil ist, dessen Klappe (43) in Richtung Reifenventil (2) vorgespannt ist.

14. Die Ventilklappe nach Anspruch 12 oder 13,
dadurch gekennzeichnet, daß
die Vorspannung des Klappen- oder Flatterventils so groß ist, daß durch Temperaturerhöhungen und/oder Reifenbenutzung auftretende Erhöhungen des Reifendruckes keine offnung der Klappe (43) erreicht wird.

15. Die Ventilkappe nach einem der Ansprüche 1 bis 14,
dadurch gekennzeichnet, daß
am geschlossenen, durchsichtigen Gehäuseende (22, 24) eine Sichtblende (25) aus undurchsichtigem Material angelegt ist, die eine Blendenöffnung (26) mit einem Durchmesser von etwa 2 bis 4 mm frei läßt, und die nicht ausgelenkte Membran (30) in einem Abstand von etwa 2 bis 4 mm zu dieser durchsichtigen Blendenöffnung (26) angeordnet ist.

16. Die Ventilkappe nach einem der Ansprüche 1 bis 15,
dadurch gekennzeichnet, daß
das Membranmaterial farbig ist.

17. Die Ventilkappe nach Anspruch 16,
dadurch gekennzeichnet, daß
die Farbe des Membranmaterials eine Signal- oder Kontrastfarbe bezüglich der Farbe des Sichtblendenmaterials ist.

18. Die Ventilkappe nach einem der Ansprüche 15 bis 17,
dadurch gekennzeichnet, daß
eine Abnahme des Reifen-Solldruckes um 0,3 bar eine deutlich sichtbare Annäherung der Membran (30) an die Blendenöffnung (26) bewirkt.

19. Die Ventilkappe nach einem der Ansprüche 1 bis 18,
dadurch gekennzeichnet, daß
eine Abnahme des Reifendruckes um je 0,1 bar eine angenähert lineare Auslenkung der Membran (30) um etwa 1 bis 2 mm bewirkt.

**Claims**

1. A pressure drop indicating valve cap
for a pneumatic tire equipped with a valve (2),
comprising a housing (11), having a closed end portion and an open end portion, and being adapted to be screwed onto a valve tube (3) of the tire valve (2),
further comprising a sealing element (20) for sealing the valve tube (3) relative to the open housing end portion, further comprising an actuator member (17) for opening the tire valve (2), and
further comprising a deflectable indicator diaphragm (30) separating the housing interior into a first chamber (31) adjacent a transparent section (24, 26) of the closed housing end portion and a second chamber (32), being in flow connection with the tire interior via a port (18) in a valve cap housing wall (15, 15') and via the open tire valve (2),
characterized in
that said port (18) in said housing wall (15, 15') may be hermetically sealed by a sealing member (40);
at least one permanently open flow path (21, 35, 38) recessed in the valve cap housing material connects the first chamber (31) with the open tire valve (2); and
when an actual tire pressure is lower than an initial tire pressure the diaphragm (30) is arranged closer to the transparent housing portion (24).

2. The valve cap according to claim 1,
wherein the sealing element (20) may be compressed by at least 1.5 to 2 mm, when screwing the valve cap (10) on the valve tube (3) of the tire valve (2).

3. The valve cap according to claim 1 or 2,
wherein the sealing element (20) being inserted in an annular recess (14) having larger cross-sectional dimensions than the cross-sectional dimensions of the sealing element (20).

4. The valve cap according to anyone of claims 1 to 3,
wherein screwing the valve cap (10) on the tire valve tube (3) causes the actuator member (17) to depress a plunger (6) of the tire valve (2) after the sealing element (20) has provided a hermetic seal between the tire valve tube (2) and the open housing end portion (12).

5. The valve cap according to anyone of claims 1 to 3,
wherein the valve cap (10) includes a screw portion (55) for screwing onto the tire valve tube (3) and an indicator member (50) movable relative to said screw portion; and
that after hermetic sealing between the tire valve tube (3) and the screw portion (55) an adjustment of the indicator member (50) will depress a plunger (6) of the tire valve (2).

6. The valve cap according to anyone of claims 1 to 5,
wherein the sealing member (40) will permanently seal the second chamber (32) after setting a nominal tire pressure in the first chamber (31) and in the second chamber (32).

7. The valve cap according to anyone of claims 1 to 6,
wherein the sealing member (40) is a shut-off member (45) which is urged by a section of a tire valve tube end face (7) against a transversely oriented housing wall (15) to thereby permanently close the port (18).

8. The valve cap according to anyone of claims 1 to 6,
wherein the sealing member (40) is a resiliently retained shut-off member (45) which is urged by a spring element (41') against a housing wall portion (15') to thereby permanently close the port (18).

9. The valve cap according to claim 8,
wherein the port (18) is formed in a housing wall portion (15') which defines a second chamber (32) and is parallel to a sidewall of the valve cap housing (11); and
that the spring element is a leaf spring (41') which is oriented substantially in parallel to said housing wall portion (15').

10. The valve cap according to claim 8 or 9,
wherein the spring element (41') may be deflected against its inherent bias due to magnetic action during screwing the valve cap (10) on the tire valve (2) or thereafter;
and said deflection of the spring element (41') causes a shut-off member (45) being separated from the port (18) and allowing pressure balance being effected between the second chamber (32) and the first chamber (31') or the open tire valve (2), respectively.

11. The valve cap according to anyone of claims 7 to 10,
wherein the port (18) is formed with a valve seat configuration, and wherein a valve body portion being complementary with said valve seat configuration and being formed integrally with the shut-off member (45).

12. The valve cap according to anyone of claims 8 to 11,
wherein the sealing member is a tapering valve body (45) which under the biasing action of the spring element (41') being urged with its tip into a likewise tapering valve seat configuration.

13. The valve cap according to anyone of claims 1 to 6,
wherein the sealing member (40) is a flap valve having its flap (43) biased towards the tire valve (2).

14. The valve cap according to claim 12 or 13,
wherein the bias of the flap valve is sufficiently large so that any tire pressure increase caused by an increase in temperature and/or use of the tire will not open the flap (43).

15. The valve cap according to anyone of claims 1 to 14,
wherein at the closed transparent housing end portion (22, 24) a sight screen (25) of opaque material is provided in which an aperture (26) having a diameter of about 2 to 4 mm is left open, and wherein the undeflected diaphragm being disposed at a distance of about 2 to 4 mm distant from said transparent aperture (26).

16. The valve cap according to anyone of claims 1 to 15,
wherein the diaphragm material is coloured.

17. The valve cap according to claim 17,
wherein the colour of the diaphragm material is a signal or contrasting colour as compared to the colour of the sight screen material.

18. The valve cap according to anyone of claims 15 to 17,
wherein a reduction of the nominal tire pressure by 0.3 bar will cause a clearly visible deflection of the diaphragm (30) towards the aperture (26).

19. The valve cap according to claim 8,
wherein any reduction of the tire pressure by about 0.1 bar will cause an approximately linear deflection of the diaphragm (30) by about 1 to 2 mm.


**Revendications**

1. Chapeau de valve produisant une indication de la diminution de pression pour un pneumatique équipé d'une valve (2) comportant un boîtier (11) fermé d'un côté et se vissant sur un tube de valve (3) de la valve du pneumatique (2),
comportant en outre un élément d'étanchéité (20) étanchant le tube de valve (3) en face de l'extrémité ouverte du boîtier du chapeau de valve vissé,
un élément de manoeuvre (17) ouvrant la valve de pneumatique (2) ainsi qu'une membrane (3) déformable servant d'indicateur et séparant l'intérieur du boîtier en une première chambre (31), voisine à une section transparente (24, 26) de l'extrémité fermée du boîtier et une deuxième chambre (32), qui communique avec l'intérieur du pneumatique par la valve de pneumatique (2) ouverte ainsi que par un trou (18) qui se trouve dans une paroi du boîtier (15, 15'),
caractérisé en ce que
le trou (18) dans la paroi du boîtier (15, 15') peut être fermé hermétiquement au moyen d'une pièce d'étanchement (40); qu'il comporte entre la première chambre (31) et la valve de pneumatique (2) ouverte au moins un canal (21, 35, 38) menagé dans le matériau du boîtier et qui ne peut être obturé;
et en ce que la membrane (30) se trouve, à une pression du pneumatique qui est inférieure à celle de l'état initial, dans une position rapprochée de la section transparente du boîtier (24).

2. Chapeau de valve suivant la revendication 1,
caractérisé en ce que
l'élément d'étanchéité (20) peut être comprimé d'au moins 1,5 à 2,0 mm lorsque le chapeau de valve (10) est vissé sur le tube de valve (3) de la valve du pneumatique (2).

3. Le chapeau de valve suivant la revendication 1 ou 2,
caractérisé en ce que
l'élément d'étanchéité (20) est placé dans un évidement (14) annulaire dont les dimensions en coupe transversale sont supérieures à celles de l'élément d'étanchéité.

4. Le chapeau de valve suivant l'une des revendications 1 à 3,
caractérisé en ce que
l'élément de manoeuvre (17) appuie sur la tige-poussoir (6) de la valve de pneumatique (2) lorsque le chapeau de valve (10) est vissé sur le tube de la valve de pneumatique (3), l'élément d'étanchéité (20) ayant créé une étanchéité tenant à la pression entre le tube de la valve de pneumatique (2) et l'extrémité ouverte du boîtier (12).

5. Le chapeau de valve suivant l'une des revendications 1 à 3,

caractérisé en ce que

le chapeau de valve (10) comporte une pièce filetée (55) qui se visse sur le tube de la valve de pneumatique (3) ainsi qu'un élément indicateur (50) coulissant par rapport à cette pièce filetée; et qu'un déplacement de l'élément indicateur (50) appuie sur la tige-poussoir (6) de la valve de pneumatique (2) après étanchement entre le tube de la valve de pneumatique (3) et la pièce filetée (55) tenant à la pression.

6. Le chapeau de valve suivant l'une des revendications 1 à 5,

caractérisé en ce que

la valeur de consigne de la pression de pneumatique ayant été réglée dans la première chambre (31) et dans la deuxième chambre (32), la pièce d'étanchement (40) obture la deuxième chambre (32) d'une façon permanente.

7. Le chapeau de valve suivant l'une des revendications 1 à 6,

caractérisé en ce que

la pièce d'étanchement (40) est un organe d'arrêt (45), qui est pressé par une section de la surface extérieure du tube de la valve de pneumatique (7) contre une paroi du boîtier (15) agencée en sens transversal et que le trou (18) en est obturé d'une façon permanente.

8. Le chapeau de valve suivant l'une des revendications 1 à 6,

caractérisé en ce que

la pièce d'étanchement (40) est un organe d'arrêt (45) retenu par ressort, qui est pressé par un élément à ressort (41') contre la paroi du boîtier (15') en obturant ainsi le trou (18) d'une façon permanente.

9. Le chapeau de valve suivant la revendication 8,

caractérisé en ce que

le trou (18) est un évidement dans une paroi du boîtier (15') qui est disposée parallèlement à la face latérale du boîtier (11) du chapeau de valve et qui limite la deuxième chambre (32); et que l'élément à ressort est constitué par un ressort à lames (41') étant essentiellement aligné parallèlement à cette paroi du boîtier (15').

10. Le chapeau de valve suivant la revendication 8 ou 9,

caractérisé en ce que

l'élément à ressort (41') peut se déformer en raison de l'effet magnétique contre sa propre contrainte au moment où le chapeau de valve (10) est, ou bien après qu'il a été vissé sur la valve de pneumatique (2), l'organe d'arrêt (45) étant alors séparé du trou (18) et une compensation de pression se produisant entre la deuxième chambre (32) et la première chambre (31) respectivement la valve de pneumatique (2) ouverte.

11. Le chapeau de valve suivant l'une des revendications 7 à 10,

caractérisé en ce que

le trou (18) présente un profil de siège de soupape et que l'organe d'arrêt (45) dispose d'une section du corps de soupape, dont la forme est adaptée à ce profil de siège de soupape.

12. Le chapeau de valve suivant l'une des revendications 8 à 11,

caractérisé en ce que

la pièce d'étanchement (40) est un corps de soupape (45) conique dont la pointe est appuyée par la précontrainte de l'élément à ressort (41') dans un profil de siège de soupape qui est également conique.

13. Le chapeau de valve suivant l'une des revendications 1 à 6,

caractérisé en ce que

la pièce d'étanchement (40) est une soupape à clapet ou vanne-papillon, dont le clapet (43) est précontraint dans le sens de la valve de pneumatique (2).

14. Le chapeau de valve suivant la revendication 12 ou 13,

caractérisé en ce que

la précontrainte de la soupape à clapet ou vanne-papillon est aussi forte qu'une ouverture du clapet (43) ne se produit pas par des augmentations de pression du pneumatique qui seraient dûes à des augmentations de température et/ou l'utilisation du pneumatique.

15. Le chapeau de valve suivant l'une des revendications 1 à 14,

caractérisé en ce que,

un écran de visualisation (25) en matériau non transparent est prévu à l'extrémité du boîtier transparent (22, 24), laissant ouverte dans l'écran une ouverture (26) d'un diamètre d'environ 2 à 4 mm et que la membrane non déformée (30) est disposée à une distance d'environ 2 à 4 mm de cette ouverture d'écran (26) transparente.

16. Le chapeau de valve suivant l'une des revendications 1 à 15,

caractérisé en ce que

la membrane est faite en un matériau coloré.

17. Le chapeau de valve suivant la revendication 16,

caractérisé en ce que

la couleur du matériau de la membrane est une couleur lumineuse ou de contraste par rapport à celle du matériau de l'écran de visualisation.

18. Le chapeau de valve suivant l'une des revendications 15 à 17,

caractérisé en ce que

une diminution de la valeur de consigne de la pression du pneumatique de 0,3 bar provoque un rapprochement nettement visible de la membrane (30) de l'ouverture d'écran (26).

19. Le chapeau de valve suivant l'une des revendications 1 a 18,

caractérisé en ce que,

une diminution de la pression du pneumatique en étapes de 0,1 bar provoque une déformation approximativement linéaire de la membrane (30) d'environ 1 à 2 mm.

EP 0 228 068 B1

FIG. 1

1

## FIG. 2

FIG. 3a

FIG. 3b

FIG. 4